# EUROPEAN PATENT APPLICATION

(11) **EP 4 814 665 A1**
(43) Date of publication of application: **30.09.2026**
(21) Application number: 25305464.7
(22) Date of filing: 28.03.2025
(51) Int. Cl.: G06F 3/01

(54) **HAPTIC PRIMITIVES FOR HAPTIC OBJECT REPRESENTATION**

(71) Applicant: InterDigital CE Patent Holdings, SAS, 75017 Paris (FR)
(72) Inventor: LECUYER, Gurvan, 35000 RENNES (FR); GALVANE, Quentin, 35235 THORIGNE-FOUILLARD (FR); CAZUC, Ewen, 35200 RENNES (FR); COVA REGATEIRO, João Pedro, 35220 CHATEAUBOURG (FR)
(74) Representative: AWA Sweden AB

(57) **Abstract**

Systems, methods, and devices disclosed herein are related to haptic primitives for haptic object representation(s). A device may include a processor. The device may be configured to identify a haptic property associated with a virtual object of a virtual reality (VR) scene. The device may determine, based on at least the haptic property, at least a first primitive shape associated with the virtual object. The device may establish a propagation path through the virtual object based on at least the first primitive shape. The device may determine, based on at least the haptic property, to partition the virtual object into at least the first primitive shape and a second primitive shape. The propagation path may be established through the virtual object based at least on the first primitive shape and/or the second primitive shape. The device may determine a third primitive shape.

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### BRIEF SUMMARY

Systems, methods, and devices disclosed herein are related to haptic primitives for haptic object representation(s). A device may include a processor. The device may be configured to identify a haptic property associated with a virtual object of a virtual reality (VR) scene. The device may determine, based on at least the haptic property, at least a first primitive shape associated with the virtual object. The device may establish a propagation path through the virtual object based on at least the first primitive shape.

The device may include one or more features. For example, the device may determine, based on at least the haptic property, to partition the virtual object into at least the first primitive shape and a second primitive shape. The propagation path may be established through the virtual object based at least on the first primitive shape and/or the second primitive shape. The device may determine a third primitive shape. The first primitive shape and/or the second primitive shape may be associated with a haptic listener. The third primitive shape may be associated with a haptic source. At least the first primitive shape or the second primitive shape may indicate a spatial location of a haptic listener. At least the third primitive shape may indicate a spatial location of a haptic source. The first primitive shape or the second primitive shape may be associated with a first set of vertices. The at least one vertex of the first set of vertices may indicate a first location associated with a haptic listener that captures a haptic signal. The third primitive shape may be associated with a second set of vertices. The at least one vertex of the second set of vertices may indicate a second location where a haptic source is applied.

The first primitive shape or the second primitive shape may be a trigger area associated with the haptic listener. The third primitive shape may be a trigger area associated with the haptic source. The device may determine at least the first primitive shape associated with the virtual object further based on a shape of the virtual object. The device may determine that the haptic property associated with the virtual object satisfies a threshold. The threshold may be associated with at least one of a thermal conductivity value, a vibrotactile mediation value, a deformation coefficient value, a hardness value, or a stiffness value. The device may (e.g., based on the determination that the haptic property satisfies the threshold), determine to partition the virtual object into at least the first primitive shape and/or a second primitive shape. The haptic property may be associated with a haptic medium. The haptic medium may include at least one modality. The propagation path may propagate a haptic signal through the virtual object based on the at least one modality.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 is a block diagram illustrating an example data structure associated with a MPEG_spatial_haptic extension.
FIG. 5 illustrates an example of one or more hardness value(s) and associated primitives.
FIG. 6 illustrates an example of primitives for haptic representation.
FIG. 7 illustrates an example of using a primitive to localize a haptic source and a haptic listener.
FIG. 8 illustrates an example of using one or more vertices to represent the haptic listener and haptic source.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

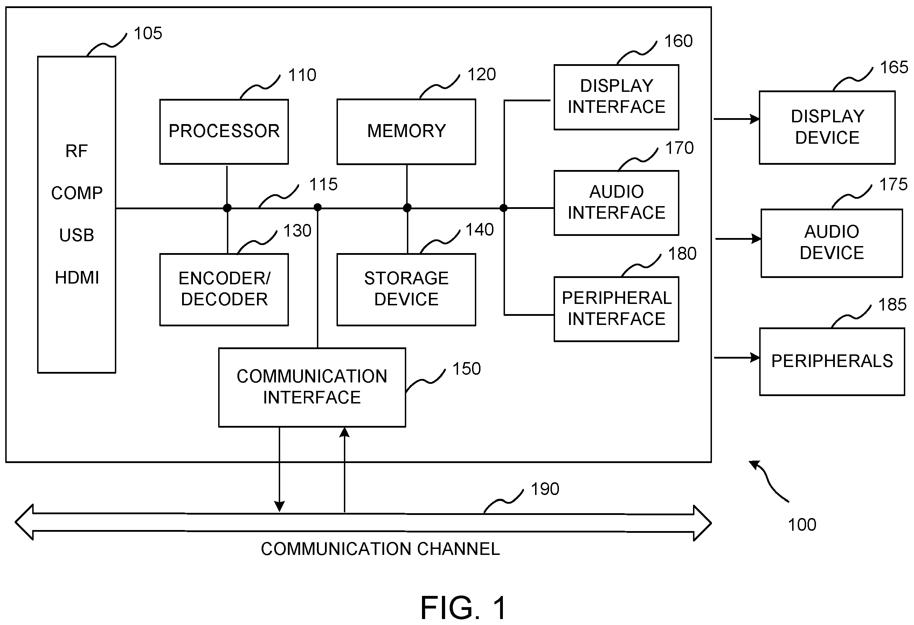

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

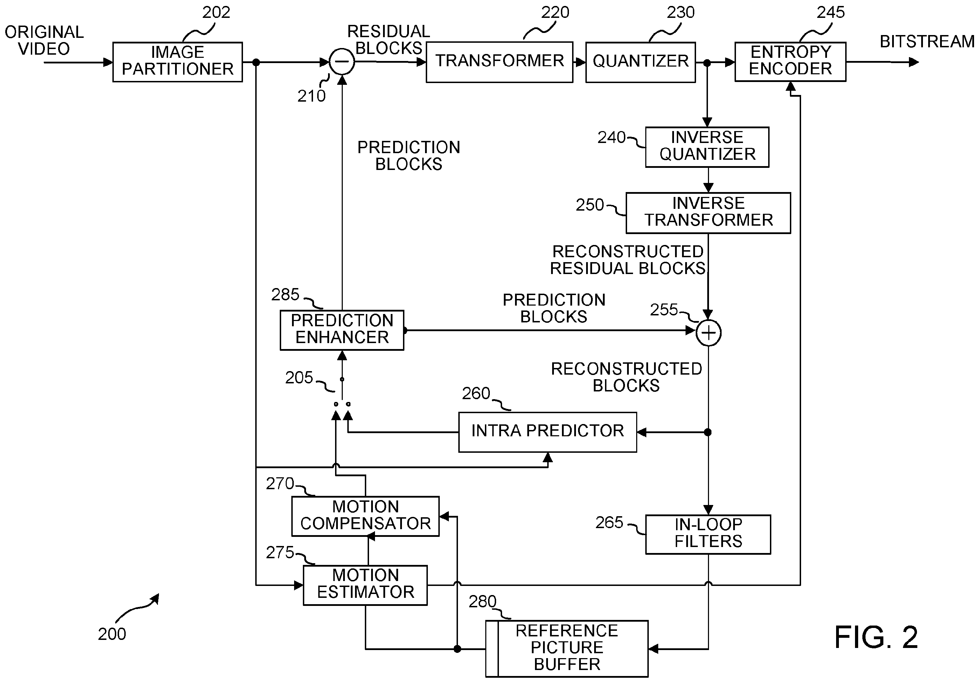

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

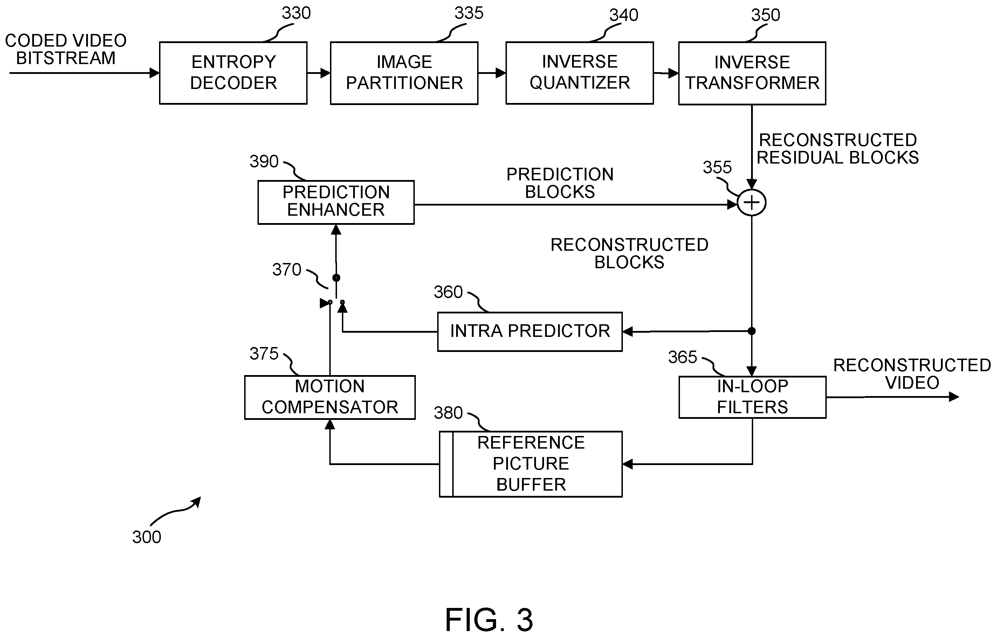

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by *C*, *Cb, Cr*)*.*

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Haptics may include the sense of touch and/or haptics may include on or more dimensions, tactile and/or kinesthetic. The tactile dimension may relate to tactile sensations such as friction, roughness, hardness, temperature and may be felt through the mechanoreceptors of the skin (e.g., merkel cell, ruffini ending, meissner corpuscle, pacinian corpuscle), and/or thermoreceptors. The kinesthetics dimension may be linked to the sensation of force/torque, position, motion/velocity provided by the muscles, tendons, and/or the mechanoreceptors in the joints.

In examples, haptics may be experienced in a movie theater with a 4DX movie. Haptics may be an additional track played along with video and audio to augment movie experiences. Haptics may be used in an interactive experience, such as in video games or a virtual reality (VR) experience, to enhance the feeling of immersion. Providing haptic feedback if/when interacting with virtual object provides natural feeling that may add a (e.g., new) layer of realism in the experience.

For interactive experiences in virtual environments, the use of haptics may be popular but the integration of (e.g., new) media may be limited. Videogames and/or VR experiences may be created using game engines (e.g., Unity, or Unreal Engine). Game engines may have made tremendous progress on one or more aspects (e.g., image quality, sound, scene complexity, and/or the like) but game engines may provide basic support for haptics. For example, a game controller (e.g., only the most common game controller) may be supported natively by the mainstream game engine, providing haptic capabilities including vibration in the hand.

Haptics is growing in popularity with the release of numerous mass market haptic devices. Broadening the range of consumer haptic devices may result in opportunities for the integration of haptic capabilities for a game engine to better support the creation of immersive content. One of the big challenges for leveraging haptic capabilities may be the support of haptic spatialization in applications.

Examples of haptic sources, haptic listeners and/or a haptic medium, along with the extensions to a gITF example are described herein.

A haptic medium may be a virtual object with haptic properties. A haptic medium may be associated with a node of the scene and/or the haptic medium's associated geometry. A (e.g., the same) node may be associated with haptic sources and/or haptic listeners. A haptic medium may modulate and/or transfer haptic information based on haptic properties of the haptic medium (e.g., physical properties). A haptic medium may describe a list of supported modalities (e.g., the physical properties of the material, and/or propagation functions for different haptic modalities).

A haptic source may be an element of the virtual scene that emits a haptic signal. A haptic source may be associated with a node of the scene and/or may be linked to the geometry associated to the node. The haptic data of a source may be described by a list of haptic medias. In examples, a haptic media may include haptic data for a vibration signal, a temperature, a movement, or a haptic modality (e.g., any other haptic modality). Haptic media may be described with reference to a buffer associated to a media file including the haptic data (e.g., a HJIF file, a HMPG file, etc.). The media may describe information on how and/or if/when to play the haptic data. Haptic media may include one or more states. Haptic media may be activated (e.g., or deactivated). If the haptic effect is activated and/or playing, the haptic source may emit the associated haptic signal that may be propagated through haptic medium(s).

A haptic listener may be an element of the scene that captures haptic information (e.g., the haptic signal) received from haptic sources. A haptic listener may be associated with a haptic device (e.g., in the real world). A haptic listener may capture (e.g., all) the haptic data. The haptic listener may include one or more haptic modalities (e.g., the haptic listener may be restricted to specific haptic modalities).

An extension to a gITF called MPEG_spatial_haptic may be described herein. An extension may be described at the gITF file level and/or at the node level.

As described in Table 1, at the gITF file level the MPEG_spatial_haptic extension may describe the list of (e.g., all) haptic mediums, haptic sources, and/or haptic listeners in the scene. An (e.g., each) element of an extension at the file level may be referenced at the node level.

**Table 1: Example semantic description(s) of the MPEG_spatial_haptic extension at the gITF file level**

| Name | Type | Default | Description | Required |
|---|---|---|---|---|
| hapticMediums | Array<MPEG_spatial_haptics.Medium> | N/A | Provides a list of haptic mediums at the gITF file level to enable spatial haptic support | Yes |
| hapticSources | Array<MPEG_spatial_haptics.Source> | N/A | Provides a list of haptic sources at the gITF file level to enable haptic support | Yes |
| hapticListeners | Array<MPEG_spatial_haptics.Listener> | N/A | Provides a list of haptic listeners at the gITF file level to enable haptic support | Yes |

An (e.g., each) element of the hapticMediums array may describe a medium with properties and/or propagation functions (e.g., of the element). A medium may describe the list of supported modalities as well as properties (e.g., thermal conductivity or vibrotactileMediation). Identifying one or more physical properties may be performed. Table 2 describes an example semantic of a haptic medium.

**Table 2: Example semantic description of the MPEG_spatial_haptic.medium items of the hapticObjects array from the MPEG_haptic extension**

| Name | Type | Default | Description | Required |
|---|---|---|---|---|
| hapticModalities | array<Enumeration> | N/A | List of haptic modalities that may be propagated through the medium. | Yes |
| | | | Possible values are described in Table 4. An empty list means that one or more (e.g., all) modalities may be transmitted. | |
| thermalConductivity | Number | N/A | Thermal conductivity of the medium expressed in W/(m·K). | No |
| vibrotactileMediation | Number | N/A | Vibrotactile properties to be | No |
| propagationFunctions | array<PropagationFunction> | N/A | List of propagation functions to use for the different supported haptic modalities. If no propagation function is specified for a haptic modality, the haptic signal may be transmitted without a modification (e.g., the propagation function may be the identity) | Yes |

Table 3 describes an example semantic describing a propagation function. The propagation function may be specified in one or more examples. In examples, uniform resource names (URNs) may be used, where a (e.g., each) URN may identify a propagation function. In examples, a user may be allowed to generate/determine their own function(s) into an object with a simple string (e.g., a user may define custom functions directly into the object with a simple string).

**Table 3: Example semantics of propagation functions**

| Name | Type | Default value | Description | Required |
|---|---|---|---|---|
| hapticModality | Enumeration | N/A | Haptic modality for which the propagation function may be described. Possible values are described in Table 4 | Yes |
| function | string | urn: haptic-propagation :identity | Function may be a URN uniquely identifying what propagation function to use. For each URN, proper formulas shall be provided indicating what are the parameters (e.g., distance, time, and/or the like) and how to use the haptic object properties. | No |
| customFunction | string | "S'=S" | Custom function defining how a haptic signal may be modulated based on the specified parameter. | No |

**Table 4: Example list of supported haptic modalities**

| |
|---|
| Pressure = 0 |
| Acceleration |
| Velocity |
| Position |
| Temperature |
| Vibrotactile |
| Water |
| Wind |
| Force |
| Electrotactile |

Table 5 describes examples of the semantics of a haptic source. A source may be characterized by a list of haptic medias.

**Table 5: Example semantic description of the MPEG_haptics.hapticSource items of the hapticSources array from the MPEG_haptic extension**

| Name | Type | Default | Description | Required |
|---|---|---|---|---|
| hapticMedias | Array<HapticMedia> | N/A | List of haptic medias associated to a source | Yes |

Table 6 describes an example semantic of haptic medias. In the context of MPEG, the haptic data associated to a haptic media may be stored in the MPEG_media.media array and may be referenced through gITF accessors. A media may be associated with a haptic modality and/or a state (e.g., enable, disabled). One or more (e.g., additional) properties including media control properties may be considered.

**Table 6: Example semantic description of the MPEG_haptics.hapticSource.hapticMedia items of the hapticEffetcs array from the haptic Sources**

| Name | Type | Default | Description | Required |
|---|---|---|---|---|
| hapticMedia | Accessor | N/A | Accessor to a media source in MPEG_media.media array including haptic media files. | Yes |
| hapticModality | Enumeration | N/A | Haptic modality for which the propagation function may be described. Possible values are described in Table 4 | Yes |
| mediaState | enumeration | "Disabled" | State of the haptic media. Possible values are | No |
| | | | Enabled | |
| | | | Disabled | |

Table 7 describes examples of the properties of haptic listeners.

**Table 7: Example semantic description of the MPEG_spatial_haptics.Listener items of the hapticListeners array from the MPEG_spatial_haptic extension**

| Name | Type | Default | Description | Required |
|---|---|---|---|---|
| hapticModality | Array<enumeration> | N/A | List of haptic modalities that may be captured by the listener. An empty list may mean that a (e.g., all) modalities are captured by the listener. | Yes |

With the MPEG_spatial_haptic extension, the haptic data of an object may be (e.g., directly) attached to a node. The extension at the node level may reference elements described at the gITF file level. Table 8 describes an example semantic of the MPEG_haptic extension at the node level.

**Table 8: Example description of the MPEG_spatial_haptic extension at the node level**

| Name | Type | Default | Description | Required |
|---|---|---|---|---|
| hapticMediums | Array<MPEG_spatial_ haptics. NodeMedium> | N/A | Reference to an item in the hapticObject array of the MPEG_haptic extension defined at gITF file level | Yes |
| hapticSources | Array<MPEG_spatial_ haptics. NodeSource> | N/A | Reference to an item in the hapticSource array of the MPEG_haptic extension defined at gITF file level | Yes |
| hapticListeners | Array<MPEG_spatial_ haptics. NodeListener> | N/A | Reference to an item in the hapticListener array of the MPEG_haptic extension defined at gITF file level | Yes |

Table 9 describes the semantic of the NodeMedium elements. Table 9 may include an index referencing an element of the hapticMediums array of the extension described at the gITF file level. One or more (e.g., additional) properties of the medium at the node level may be investigated.

**Table 9: Example semantics of the NodeMedium elements of the hapticMediums elements in the MPEG_spatial_haptics extension at the node level**

| Name | Type | Default | Description | Required |
|---|---|---|---|---|
| index | Integer | N/A | Reference to an item in the hapticMediums array of the MPEG_spatial_haptic extension defined at gITF file level | Yes |

Table 10 describes the semantic of the NodeSource elements. Table 10 may include an index referencing an element of the hapticSources array of the extension described at the gITF file level. A property indicating the (e.g., precise) location and/or shape of the source may not be described. One or more (e.g., additional) properties of the source at the node level may be investigated.

**Table 10: Example semantics of the NodeSource elements of the hapticSources elements in the MPEG_spatial_haptics extension at the node level**

| Name | Type | Default | Description | Required |
|---|---|---|---|---|
| index | Integer | N/A | Reference to an item in the hapticSources array of the MPEG_spatial_haptic extension defined at gITF file level | Yes |
| instanceLocation/shape | TBD | TBD | TBD | TBD |

Table 11 describes the semantic of the NodeListener elements. Table 11 may include an index referencing an element of the hapticSources array of the extension described at the gITF file level. A property indicating the (e.g., precise) location and/or shape of the listener may be described. One or more (e.g., additional) properties of the listener at the node level may be investigated (e.g., an id property).

**Table 11: Example semantics of the NodeListener elements of the hapticListeners elements in the MPEG_spatial_haptics extension at the node level**

| Name | Type | Default | Description | Required |
|---|---|---|---|---|
| index | Integer | N/A | Reference to an item in the hapticListeners array of the MPEG_spatial_haptic extension defined at gITF file level | Yes |
| instanceLocation/shape | TBD | TBD | TBD | TBD |

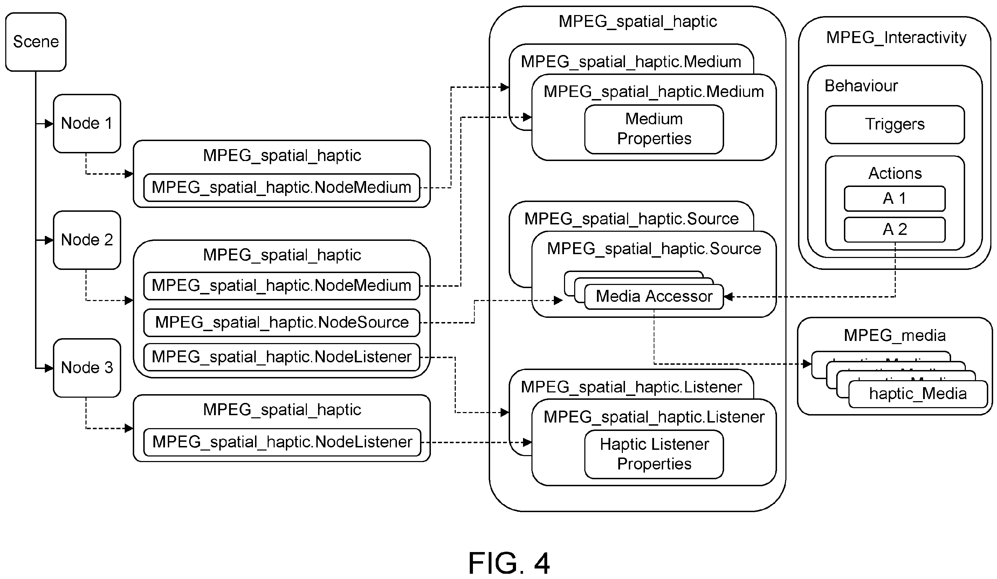

FIG. 4 illustrates an example of the data structure associated with the MPEG_spatial_haptic extension. One or more (e.g., all) haptic mediums, haptic sources, and/or haptic listeners may be described with the MPEG_spatial_haptic extension at the gITF file level. An object in the scene may be associated with haptic mediums, haptic sources, and/or haptic listeners. Examples described herein may enable a user to optimize data storage. If an object in the scene is duplicated (e.g., many times) the haptic data may be described once (e.g., only once) at the top level and may be referenced at the node level. FIG. 4 illustrates an example of a gITF scene using the proposed MPEG_spatial_haptic extension.

In examples, interactive nodes where a (e.g., each) node may be represented with a (e.g., basic) shape primitive may be described herein (e.g., interchangeably referred to herein as a primitive or a primitive shape). Table 12 describes an example primitive.

**Table 12: Example semantics of MPEG_scene_interactive.trigger.primtive properties**

| Name | Type | Usage | Default | Description |
|---|---|---|---|---|
| type | enumeration | O | BV_SPHEROID | Describes the type of primitive used to activate the proximity trigger. The available options are: |
| | | | | *BV_CUBOID =* 0, |
| | | | | *BV_PLANE_REGION = 1,* |
| | | | | *BV_CYLINDER*_*REGION = 2,* |
| | | | | *BV_CAPSULE_REGION = 3,* |
| | | | | *BV_SPHEROID = 4* |
| | | | | The default may be *BV_SPHEROID.* |
| boundary | number | O | 0.0 | Describes the region of intersection within the primitive. If zero, then an (e.g., all) area of the primitive activates the trigger. Otherwise, the region of intersection decreases following the normal direction of a (e.g., all) sides of the primitive from its centroid. For the capsule primitive, it may be applied over the radius, top, and/or base attributes. |
| transformationM atrix | array | O | [1.0,0.0,0.0,0.0, 0.0,1.0,0.0,0.0, 0.0,0.0,1.0,0.0, 0.0,0.0,0.0,1.0] | Floating-point 4x4 matrix that describes the initial orientation, translation, and/or scale of a primitive. Formatted in column-major order. The primitive may follow x+ for width, y+ for height, z+ for length. The matrix transformation may allow transform a primitive after initialization. |

A primitive may be a 3D geometrical shape that may include the form of a cube, plane, cylinder, capsule or sphere. A (e.g., each) shape may be tied to the interactive framework to activate or launch one or more events. In examples, a (e.g., consistent) representation of one or more (e.g., basic) shapes and/or a description of their functionalities may not exist.

A haptic signal may be (e.g., mainly) propagated through objects. In a virtual scene, an (e.g., each) object may be considered as a haptic object. A haptic object may be described using hapticMedium properties. To propagate a haptic signal through a haptic medium, one or more (e.g., all) objects contacting the haptic medium and/or the contact point from which the haptic signal is coming in may be considered. The use of a complex mesh may be an issue as the computation of the trajectory of the signal may not be trivial for a (e.g., complex) shape. For example, considering a mesh with convex topology, the propagation between two points may not rely on the 3D Euclidian distance, as the shortest path (e.g., interchangeably referred to herein as a propagation path) may be enclosed in the mesh volume, thus examples described herein may include logic to handle the example described herein.

Handling interactions between one or more (e.g., two) complex meshes may be a challenging task as the computation of the intersection of (e.g., two) meshes may be computationally intensive and/or may use a high frequency. A system and/or device may have an issue rendering a scene including multiple (e.g., many) haptic objects. The localization of the collision on one or more complex meshes may be challenging. The localization may be provided to retrieve semantic attached to the collision localization. For example, a device may retrieve the body part corresponding to the collision for an avatar.

Haptic listeners may oversee the capture of haptic feedback with the objective to render the haptic signal using one or more haptic devices. At least two parameters may be used to render the haptic signal. Location of the haptic listener on the haptic object may be used, and/or mapping between the haptic listener and a haptic devices and/or actuators may be provided. In examples, as described in the

Table 10, information on how to attach the haptic listener to a haptic object may not be provided, and/or it may be left to the application to describe the information. An issue (e.g., the same issues) may apply to the haptic source as described in Table 11. A haptic source may emit haptic feedback through an object. The haptic feedback may be due to a collision between at least two haptic mediums, or the feedback may be a predetermined haptic event.

Shapes (e.g., basic shapes) may be used in computer graphics optimization algorithms, although there may not be a description that permits the representation of (e.g., basic) shapes common among platforms. Shapes may be represented, although there may be a limitation on tying a shape to an event detection mechanism.

The representation and/or rendering of spatial haptic data based on the computation of haptic primitives may be provided. Haptic primitives may be used to evaluate the path of a haptic signal, from a haptic source to a haptic listener (e.g., in an efficient fashion to drastically reduce the computational complexity of a task). The representation of haptic mediums on a first side and/or another approach for the representation of haptic listeners and sources that include information (e.g., more detailed information) may be described herein.

Basic shape primitives may be described herein.

A shape (e.g., a basic shape) may be a primitive. A primitive object may allow partitioning of a mesh object (e.g., to enhance the experience of interaction with the object(s)). A primitive object may be a 3D shape. The functionality of a (e.g., basic) shape primitive may be simplified in terms of complexity and/or representation (e.g., the topology resolution may be small, to offer to the application (e.g., additional) areas of haptic interactions).

Primitives may be described herein.

A primitive object may be described herein. A primitive object may be available (e.g., at all times) to the scene and/or components of the scene (e.g., all of its components). The primitive object may be at the root level of a scene (e.g., instead of being conditioned to a single object). The primitive object at the root level of a scene may be accessible to functionalities (e.g., other advance functionalities). Table 13 describes example semantics of primitive(s) for haptic interactions.

**Table 13: Example semantics of primitive for haptic interactions**

| Name | Type | Usage | Default | Description |
|---|---|---|---|---|
| type | enumeration | O | SPHEROID | Describes the type of primitive used to activate the proximity trigger. The available options are: |
| | | | | *CUBOID =* 0, |
| | | | | *PLANE_REGION =* 1, |
| | | | | *CYLINDER_REGION = 2,* |
| | | | | *CAPSULE_REGION = 3,* |
| | | | | *SPHEROID = 4* |
| transformationMatrix | array | O | [1.0,0.0,0.0,0.0, 0.0,1.0,0.0,0.0, 0.0,0.0,1.0,0.0, 0.0,0.0,0.0,1.0] | Floating-point 4x4 matrix that defines the initial orientation, translation, and/or scale of a primitive. Formatted in column-major order. The primitive may follow x+ for width, y+ for height, z+ for length. The matrix transformation may transform a primitive after initialization. |

Table 14 describes an example construction and/or example definition of (e.g., each) primitive(s).

**Table 14: Example description of primitive type(s) for haptic interactions**

| Name | Type | Usage | Default | Description |
|---|---|---|---|---|
| if (type == CUBOID) { | | | | |
| width | number | M | | Width of the box. |
| height | number | M | | Height of the box. |
| length | number | M | | Length of the box. |
| centroid | VEC3 | M | | Centroid 3D coordinate (x,y,z) of the cube. |
| } | | | | |
| if (type == PLANE_REGION) { | | | | |
| width | number | M | | Width of the plane. |
| height | number | M | | Height of the plane. |
| centroid | VEC2 | M | | Centroid 2D coordinate (x,y) or (x,z) or (y,z) of the plane. |
| } | | | | |
| if (type == CYLINDER_REGION) { | | | | |
| radius | number | M | | Radius of the cylinder. |
| length | number | M | | Length of the cylinder. |
| centroid | VEC3 | M | | Centroid 3D coordinate (x,y,z) of the cylinder |
| } | | | | |
| if (type == CAPSULE_REGION) { | | | | |
| radius | number | M | | Radius of the capsule. |
| baseCentroid | VEC3 | M | | Centroid 3D coordinate (x,y,z) of the base semi-sphere of the capsule. |
| topCentroid | VEC3 | M | | Centroid 3D coordinate (x,y,z) of the top semi-sphere of the capsule. |
| } | | | | |
| if (type == SPHEROID) { | | | | |
| radius | number | M | | Radius of the sphere. |
| centroid | VEC3 | M | | Centre 3D coordinate (x,y,z) of the sphere. |
| } | | | | |

Haptic medium primitives may be described herein.

For haptic mediums, a haptic representation at the nodeMedium level in the scene may be included. A haptic representation may be a list of 3D primitives shapes (e.g., basic shape primitives) including a sphere, a cube, a cylinder, and/or another mathematical representation. The list may include one or more (e.g., different) primitives. An (e.g., each) element of the list may be associated with (e.g., refer to) a (e.g., different) haptic medium (e.g., allowing for a complex haptic signal propagation while preserving the computation efficiency based on the mathematical representation).

Haptic source and listeners primitives may be described herein.

A haptic representation for the haptic listener and/or haptic source may include using at least two examples and/or using one or more primitives as described herein. Haptic sources and haptic listeners may request localization information as they may be associated to a portion of an object (e.g., haptic sources and haptic listeners may require more precise localization information as they may be associated with only part of an object). For example, the vibration triggered in a virtual environment on a virtual phone may be from a portion of the virtual phone (e.g., the bottom portion of a virtual phone, the top portion and/or any other portion).

A source primitive and/or a listener as primitive may be described herein.

For a (e.g., each) source node and/or listener node, a list of primitives that indicate the spatial location of the haptic source and the haptic listener respectively may be described.

For a source node, the primitives list may be used as a trigger area. A (e.g., each) haptic medium inside a trigger area (e.g., the resulting trigger area) may be considered as receiving the signal of the haptic source. For the haptic listener, the primitives list may be used as a trigger area. A (e.g., each) haptic medium inside the resulting trigger area that conveys a haptic signal may be captured (e.g., received) by the listener. In examples, one or more primitive shape (e.g., that may be determined based on a haptic property associated with a virtual object) may indicate a spatial location of a haptic listener and/or a spatial location of a haptic source. The primitive shape may be a trigger area associated with the haptic listener and/or the haptic source.

Source and/or listener as a vertices list may be described herein.

For a (e.g., each) source node and/or listener node, a reference to a primitive and/or a list of vertices that are attached to the haptic source and the haptic listener respectively, may be described.

For the source node, the vertices list may be used to describe the location on the haptic medium where the haptic source is to be applied. If the list includes a (e.g., only one) vertex, the source node may be emitting from a point in space (e.g., a single point in space). If/when one or more (e.g., several) points are used, an emitting volume may be computed (e.g., the points may be localized in space). For the haptic listener, the primitives list may be used as a trigger area. A (e.g., each) haptic medium inside the resulting trigger area that conveys a haptic signal may be captured (e.g., received) by the listener. In examples, one or more primitive shapes (e.g., that may be determined based on a haptic property associated with a virtual object) may be associated with a first set of vertices and/or a second set of vertices. At least one vertex of the first set of vertices may indicate a first location associated with a haptic listener that captures a haptic signal. At least one vertex of the second set of vertices may indicate a second location where a haptic source is applied. In examples, the first location and/or the second location may include a trigger area associated with the haptic source and/or the haptic listener.

A haptic primitive computation may be described herein.

Primitive representations of a mesh (e.g., bounding volume such as boxes or spheres) may be described. Haptic properties associated to the mesh, to compute a primitive may be described herein. Haptic properties associated to a mesh may be used to generate a primitive (e.g., the adequate primitives). A list of properties may (e.g., only) include the thermal conductivity and/or vibrotactile mediation. A list of properties with information including a deformation coefficient, the hardness, or the stiffness of the material may be included. In examples, a list of properties associated with a mesh to generate a primitive may include information such as a deformation coefficient, the hardness of a material, or the stiffness of a material.

For animated meshes associated to a skeleton, the computation of haptic primitives may be based on the skeleton and/or the skinning weights mapping the mesh to the skeleton. The computation of haptic primitives based on the skeleton and/or the skinning weights may create one or more moving primitives that move in the environment with the skeleton. For mesh(es) without a skeleton, one or more examples described herein may not be used (e.g., even though the mesh may be deformable). Additional haptic information may be used to divide a mesh into one or more primitives. The (e.g., added) haptic information may provide the (e.g., necessary) information on the deformability of the object. If an object includes a high hardness value or a low deformation coefficient, a (e.g., single) primitive (e.g., or a minimum number of primitives for convex meshes) may be requested. For deformable objects (e.g., for highly deformable objects), the number of primitives may be adapted to ensure that deformations of the objects do not impact the fidelity of the primitive with regards to the mesh geometry.

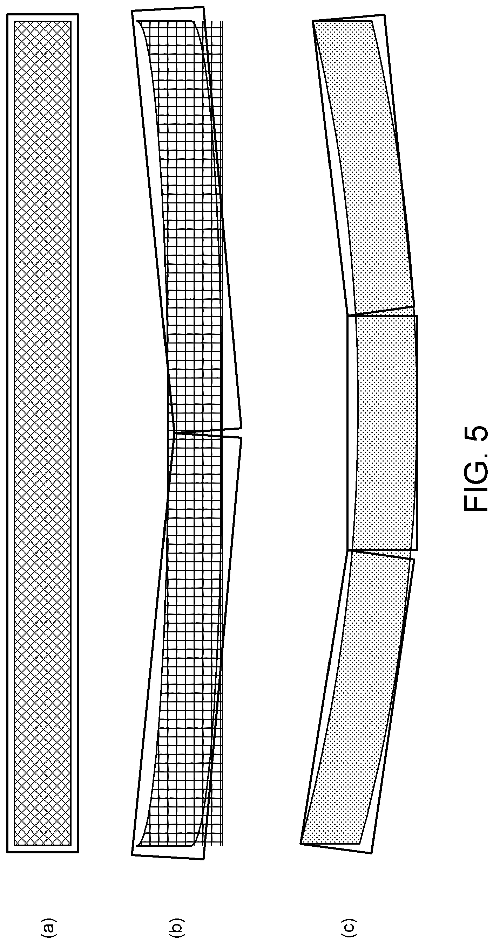

FIG. 5 illustrates an example of how an object (e.g., a similar object) with one or more hardness value(s) may be divided into one or more primitives. In examples, a virtual object may be partitioned based on at least a haptic property. The virtual object may be partitioned into one or more primitives. A propagation path may be established through the virtual object based at least on the one or more primitives.

FIG. 5 illustrates a primitive computation example that may be used. The object in (a) may have a hardness value of 1. The haptic primitive representation of the object in (a) may be using a (e.g., only one) primitive, as the object may not deform. The object in (b) may have a hardness of 0.5. The object in (b) may be deformed. The haptic representation of the object in (b) may use at least two primitives to follow the (e.g., maximum) deformation of the object. The object in (c) may have a hardness value of 0.1, and the object in (c) may show a large deformation (e.g., in comparison to the object in (b)). The haptic representation of the object in (c) may use at least 3 primitives to ensure that the object is represented (e.g., even at maximum deformation).

Haptic medium primitives may be described herein.

Table 15 describes an example of a (e.g., new) nodeMedium object. A haptic representation using 3D primitive shapes may be provided by modifying the MPEG_spatial_haptics.NodeMedium object. An (e.g., new) array of primitives may be added to an object. The number of items in the array indexes may be similar to (e.g., the same as) the number of items in the array of primitives. Indexes may include a list of references to items in the hapticMediums array. The hapticMedium corresponding to the i^{th} element in indexes may be applied to the i^{th} element in primitives.

**Table 15: Example semantics of the modified NodeMedium elements of the hapticMediums elements in the MPEG_spatial_haptics extension at the node level**

| Name | Type | Default | Description | Required |
|---|---|---|---|---|
| index | integer | N/A | Reference to an item in the hapticMediums array of the MPEG_spatial_haptic extension defined at gITF file level | Yes |
| primitives | Array<Primitive> | N/A | List of primitives used as representation for the haptic propagation. | Yes |

Table 16 describes an example of a (e.g., new) nodeMedium object. In examples, a (e.g., each) primitive of the medium may be associated with a (e.g., different) haptic medium from the file level extension. In examples, the MPEG_spatial_haptics.NodeMedium may be modified to enable a primitive of the medium to be associated with a haptic medium from the file level extension. A previous integer index may be replaced by a list of indexes and/or an (e.g., new) array (e.g., named primitives) may be added. The number of items in the array (e.g., indexes) may be similar to (e.g., the same as) the number of items in the array (e.g., named primitives). The array (e.g., indexes) may include a list of references to item(s) in the hapticMediums array. The hapticMedium corresponding to the i^{th} element in the array (e.g., indexes) may be applied to the i^{th} element in the array (e.g., primitives).

**Table 16: Example semantics of the modified NodeMedium elements of the hapticMediums elements in the MPEG_spatial_haptics extension at the node level**

| Name | Type | Default | Description | Required |
|---|---|---|---|---|
| indexes | Array<integer> | N/A | List of references to items in the hapticMediums array of the MPEG_spatial_haptic extension defined at gITF file level | Yes |
| primitives | Array<Primitive> | N/A | List of primitives used as representation for the haptic propagation. | Yes |

Haptic source(s) and/or haptic listener(s) as primitive(s) may be described herein.

Table 17 describes an example of the source node representation using a primitive shape. An array of primitives (e.g., named primitives) may be added to the object. One or more primitives (e.g., the combination of the primitives) may represent the volume and/or localization in space of the haptic source.

**Table 17: Example semantics of the modified NodeSource elements of the hapticSources elements in the MPEG_spatial_haptics extension at the node level**

| Name | Type | Default | Description | Required |
|---|---|---|---|---|
| index | Integer | N/A | Reference to an item in the hapticSources array of the MPEG_spatial_haptic extension defined at gITF file level | Yes |
| primitives | Array<Primitive> | N/A | List of primitives used to represent the location of the haptic source | Yes |

Table 18 describes an example of a listener node representation using a primitive shape. An array of primitives (e.g., named primitives) may be added to an object. One or more primitives (e.g., combination of the primitives) may represent the volume and/or localization in space of the haptic listener.

**Table 18: Example semantics of the modified NodeListener elements of the haptic listeners elements in the MPEG_spatial_haptics extension at the node level**

| Name | Type | Default | Description | Required |
|---|---|---|---|---|
| index | Integer | N/A | Reference to an item in the hapticListeners array of the MPEG_spatial_haptic extension defined at gITF file level | Yes |
| primitives | Array<Primitive> | N/A | List of primitives used to represent the location of the haptic listener | Yes |

Haptic source(s) and/or haptic listener(s) as a vertices list may be described herein.

Table 19 describes an example of a source node representation using a list of vertices. A parameter (e.g., primitiveld) may be added to an object. The parameter (e.g., primitiveld) maybe an integer referencing to an element of the primitives array of the NodeMedium attached to the node. An array of vertices (e.g., named vertices) may be added to the object. The array of vertices (e.g., vertices) may be a list of integers referencing the vertices of the primitive referenced by the parameter (e.g., primitiveld) that emit the haptic source. In examples, the parameter (e.g., primitiveld) and/or the array (e.g., vertices) may be optional field(s). If the parameter and/or the array are not specified, then (e.g., the whole) NodeMedium may be considered to emit the hapticSource.

**Table 19: Example semantics of the modified NodeSource elements of the hapticSources elements in the MPEG_spatial_haptics extension at the node level**

| Name | Type | Default | Description | Required |
|---|---|---|---|---|
| index | Integer | N/A | Reference to an item in the hapticSources array of the MPEG_spatial_haptic extension defined at gITF file level | Yes |
| primitiveld | Integer | N/A | Reference to a primitive in the primitives array of the NodeMedium attached to the node. | No |
| vertices | Array<integer> | N/A | List of integers referencing the vertices of the primitive referenced by primitiveld that emit the hapticSource. | No |

Table 20 describes an example of the listener node representation using a list of vertices. A parameter (e.g., primitiveld) may be added to an object. The parameter (e.g., primitiveld) may be an integer referencing to an element of the primitives array of the NodeMedium attached to the node. An array of vertices (e.g., named vertices) may be added to the object. The array of vertices may be a list of integers referencing the vertices of the primitive (e.g., referenced by primitiveld) where the hapticListener may be located. In examples, the parameter (e.g., primitiveld) and/or the array of vertices may be optional field(s). If the parameter and/or the array are not specified, the hapticListener may be located at a point (e.g., every point) of the NodeMedium.

**Table 20: Example semantics of the modified NodeListener elements of the hapticListeners elements in the MPEG_spatial_haptics extension at the node level**

| Name | Type | Default | Description | Required |
|---|---|---|---|---|
| index | Integer | N/A | Reference to an item in the hapticListeners array of the MPEG_spatial_haptic extension defined at gITF file level | Yes |
| primitiveld | Integer | N/A | Reference to a primitive in the primitives array of the NodeMedium attached to the node. | No |
| vertices | Array<integer> | N/A | List of integers referencing the vertices of the primitive referenced by primitiveld where the hapticListener may be located. | No |

A haptic primitive computation may be described herein.

Table 21 describes examples of one or more properties of the hapticsObjects array. One or more properties (e.g., one or more haptic properties) may be added to the haptic medium object in the file level extension (e.g., to improve the primitive computation operations). In examples, a deformation coefficient property may be added to the haptic medium object in the file level extension. In examples, one or more properties such as stiffness, hardness, and/or the like may be added. In examples, a virtual object may be partitioned into one or more primitives based on the determination that the haptic property satisfies a threshold. The threshold may be associated with one or more haptic properties (e.g., a thermal conductivity value, a vibrotactile mediation value, a deformation coefficient value, a hardness value, or a stiffness value, and/or the like).

**Table 21: Semantic description of the MPEG_spatial_haptic.medium items of the hapticObjects array from the _haptic extension**

| Name | Type | Default | Description | Required |
|---|---|---|---|---|
| hapticModalities | array<Enumeration> | N/A | List of haptic modalities that may be propagated through the medium. Possible values are described in Table 4. An empty list means that (e.g., all) modalitie(s) may be transmitted. | Yes |
| thermalConductivity | Number | N/A | Thermal conductivity of the medium expressed in W/(m·K). | No |
| vibrotactileMediation | Number | N/A | Vibrotactile properties to be | No |
| deformation_coefficient | Number | N/A | Deformation coefficient of the material | Yes |
| propagationFunctions | array<PropagationFunction> | N/A | List of propagation functions to use for the different supported haptic modalities. If no propagation function may be specified for a haptic modality, the haptic signal may be transmitted a modification (e.g., the propagation function may be the identity) | Yes |

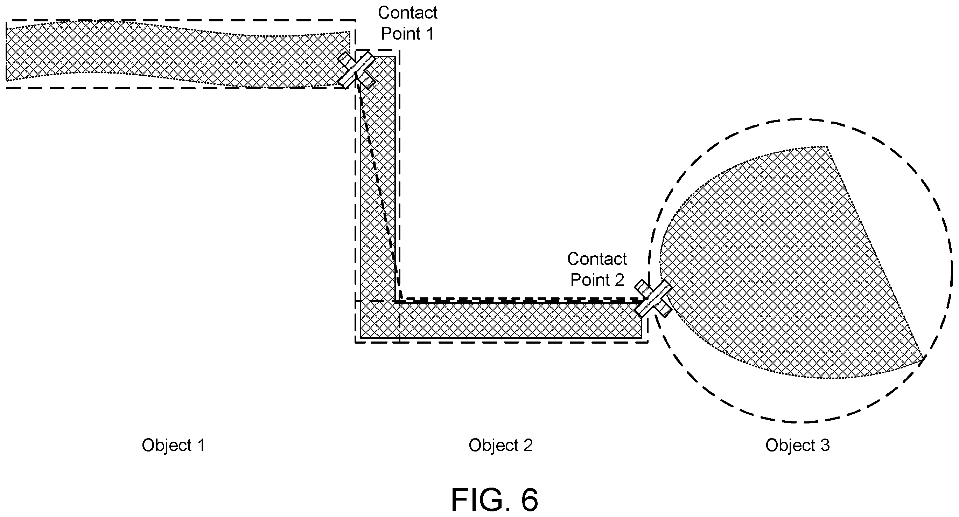

FIG. 6 illustrates an example use of primitives for a haptic representation. FIG. 6 illustrates an example scene with three haptic objects. Object 1 is a deformed rectangle that may be approximated by a rectangle (e.g., one rectangle primitive). Object 2 is an "L" shaped object that may be approximated using two rectangles (e.g., two rectangle primitives). Object 3 is deformed uncomplete circle that may be approximated using a circle (e.g., using a circle primitive). Using the haptic representation of an (e.g., each) object may allow for a quick computation of the path between the two contact points based on the parameter of both rectangles used to represent object 2.

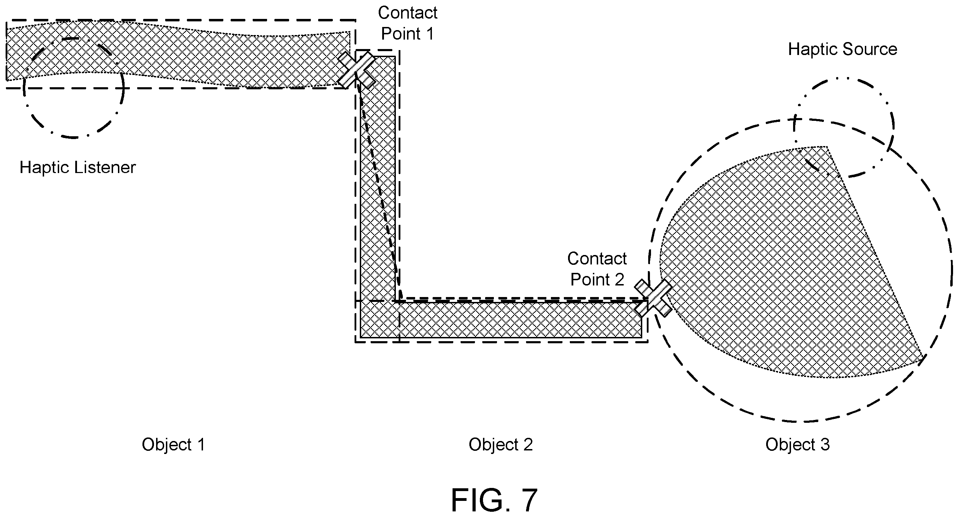

FIG. 7 illustrates an example of using a primitive to localize the haptic source and/or haptic listener in a scene. FIG. 7 illustrates the representation of a haptic source and a haptic listener using primitives. The haptic source is represented using a circle (e.g., a circle primitive) that may intersect the haptic representation of object 3. As shown in FIG. 7, object 3 (e.g., all of object 3) may be considered as emitting the haptic feedback of the haptic source. The haptic listener may be represented using a circle, intersecting the haptic representation of object 1. Object 1 (e.g., the whole of object 1) may be acting as a listener. The path of the haptic feedback sent by the haptic source may be approximated by the path between the contact point 1 and contact point 2.

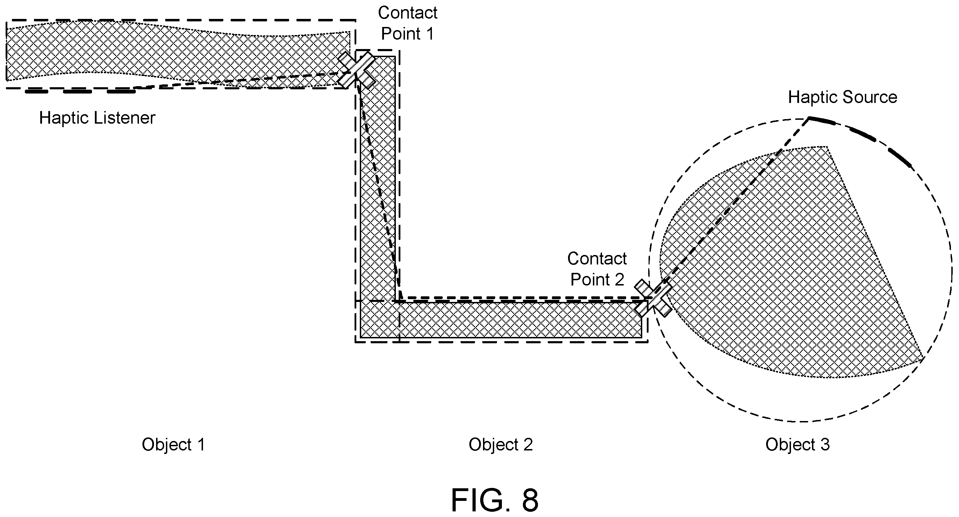

FIG. 8 illustrates an example of using a list of vertices to represent the haptic listener and/or haptic source. FIG. 8 illustrates an example of the representation of a haptic source and/or a haptic listener using a list of vertices. The haptic source may be represented using two vertices of the haptic representation of object 3 (e.g., using a wider dash segment on FIG. 8). The haptic listener may be represented using three vertices of the haptic representation of object 1. As shown in FIG. 8, the path of the haptic feedback sent by the haptic source may be approximated by the path between the contact point 1 and contact point 2 (e.g., but extra computation may be performed to compute the distance between the contact point 1 and the haptic listener, and between the contact point 2 and the haptic source). The second representation may include an increased computation and/or allow for an accurate (e.g., a more accurate) localization of haptic sources and/or haptic listeners in the scene.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for dequantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A device comprising:
a processor configured to:
identify a haptic property associated with a virtual object of a virtual reality (VR) scene;
determine, based on at least the haptic property, at least a first primitive shape associated with the virtual object; and
establish a propagation path through the virtual object based on at least the first primitive shape.

2. The device of claim 1, wherein the processor is further configured to:
determine, based on at least the haptic property, to partition the virtual object into at least the first primitive shape and a second primitive shape, wherein the propagation path is established through the virtual object based at least on the first primitive shape and the second primitive shape.

3. The device of claim 2, wherein the processor is further configured to:
determine a third primitive shape, wherein the first primitive shape and the second primitive shape are associated with a haptic listener, and the third primitive shape is associated with a haptic source.

4. The device of claim 2, wherein the processor is further configured to:
determine a third primitive shape, wherein at least the first primitive shape or the second primitive shape indicate a spatial location of a haptic listener and at least the third primitive shape indicates a spatial location of a haptic source.

5. The device of claim 2, wherein the processor is further configured to:
determine a third primitive shape, wherein the first primitive shape or the second primitive shape is associated with a first set of vertices, and wherein at least one vertex of the first set of vertices indicates a first location associated with a haptic listener that captures a haptic signal, and wherein the third primitive shape is associated with a second set of vertices, and wherein at least one vertex of the second set of vertices indicates a second location where a haptic source is applied.

6. The device of claim 4 or claim 5, wherein the first primitive shape or the second primitive shape is a trigger area associated with the haptic listener and the third primitive shape is a trigger area associated with the haptic source.

7. The device of any one of claims 1-6, wherein the processor is further configured to:
determine at least the first primitive shape associated with the virtual object further based on a shape of the virtual object.

8. The device of any one of claims 1-7, wherein the processor is further configured to:
determine that the haptic property associated with the virtual object satisfies a threshold, wherein the threshold is associated with at least one of a thermal conductivity value, a vibrotactile mediation value, a deformation coefficient value, a hardness value, or a stiffness value; and
based on the determination that the haptic property satisfies the threshold, determine to partition the virtual object into at least the first primitive shape and the second primitive shape.

9. The device of any one of claims 1-8, wherein the haptic property is associated with a haptic medium, wherein the haptic medium includes at least one modality, and wherein the propagation path propagates the haptic signal through the virtual object based on the at least one modality.

10. A method comprising:
identifying a haptic property associated with a virtual object of a virtual reality (VR) scene;
determining, based on at least the haptic property, at least a first primitive shape associated with the virtual object; and
establishing a propagation path through the virtual object based on at least the first primitive shape.

11. The method of claim 10, wherein the method further comprises:
determining, based on at least the haptic property, to partition the virtual object into at least the first primitive shape and a second primitive shape, wherein the propagation path is established through the virtual object based at least on the first primitive shape and the second primitive shape.

12. The method of claim 11, wherein the method further comprises:
determining a third primitive shape, wherein the first primitive shape and the second primitive shape are associated with a haptic listener, and the third primitive shape is associated with a haptic source.

13. The method of claim 11, wherein the method further comprises:
determining a third primitive shape, wherein at least the first primitive shape or the second primitive shape indicate a spatial location of a haptic listener and at least the third primitive shape indicates a spatial location of a haptic source.

14. The method of claim 11, wherein the method further comprises:
determining a third primitive shape, wherein the first primitive shape or the second primitive shape is associated with a first set of vertices, and wherein at least one vertex of the first set of vertices indicates a first location associated with a haptic listener that captures a haptic signal, and wherein the third primitive shape is associated with a second set of vertices, and wherein at least one vertex of the second set of vertices indicates a second location where a haptic source is applied.

15. The method of claim 13 or claim 14, wherein the first primitive shape or the second primitive shape is a trigger area associated with the haptic listener and the third primitive shape is a trigger area associated with the haptic source.
